(19)

Europäisches
Patentamt
European
Patent Office
Office européen
des brevets

(11)  **EP 2 339 538 B1**

(12)  **EUROPEAN PATENT SPECIFICATION**

(45) Date of publication and mention
of the grant of the patent:
**12.02.2014  Bulletin 2014/07**

(51) Int Cl.:
*G06T 7/00* (2006.01)      *G06T 15/00* (2011.01)
*G06T 19/00* (2011.01)

(21) Application number: **09306321.2**

(22) Date of filing: **23.12.2009**

(54) **Artifact-free filet view for virtual endoscopy of lumen structures**

Artefaktfreie Filet-Ansicht zur virtuellen Endoskopie von tubularen Strukturen

Vue de filet sans artefact pour une endoscopie virtuelle de structures tubulaires

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(43) Date of publication of application:
**29.06.2011  Bulletin 2011/26**

(73) Proprietor: **Intrasense
34000 Montpellier (FR)**

(72) Inventors:
• **Banegas, Frederic
  34070 Montpellier (FR)**
• **Spuhler, Christoph
  34000 Montepellier (FR)**
• **Caderas de Kerleau, Charles
  34280 Carnon (FR)**
• **Moulis, Marc
  34770 Ggean (FR)**

(74) Representative: **Pontet Allano & Associes
Parc Orsay Université
25, rue Jean-Rostand
91893 Orsay Cedex (FR)**

(56) References cited:
• **A. VILANOVA BARTROLI ET AL: "Virtual Colon
Flattening" VISSYM '01 JOINT EUROGRAPHICS
- IEEE TCVG SYMPOSIUM ON VISUALIZATION,
CONFERENCE PROCEEDINGS, May 2001
(2001-05), pages 127-136, XP002585534
Retrieved from the Internet: URL:http:
//www.cg.tuwien.ac.at/research/vi s/vismed/
ColonFlattening/> [retrieved on 2010-06-01]**
• **alark joshi: "lecture notes on ray-casting" March
2005 (2005-03), XP002585535 Retrieved from the
Internet: URL:http://www.cs.umbc.edu/
~alark1/cmsc435 /lectures/RayCasting4.pdf
[retrieved on 2010-06-01]**
• **SHIN B S ET AL: "Efficient unfolding of virtual
endoscopy using linear ray interpolation"
COMPUTER METHODS AND PROGRAMS IN
BIOMEDICINE, ELSEVIER, AMSTERDAM, NL
LNKD- DOI:10.1016/J.CMPB.2008.09.003, vol. 93,
no. 2, 1 February 2009 (2009-02-01), pages
174-184, XP025770037 ISSN: 0169-2607 [retrieved
on 2008-10-23]**
• **VILANOVA BARTROLI A V ET AL: "Nonlinear
virtual colon unfolding" VISUALIZATION, 2001.
VIS '01. PROCEEDINGS, IEEE, PI LNKD- DOI:
10.1109/VISUAL.2001.964540, 1 January 2001
(2001-01-01), pages 411-579, XP031172915 ISBN:
978-0-7803-7201-6**

## Description

## Field of the invention

The general field of the invention relates to, without being limited to, medical imaging. It finds applications in virtual endoscopy of substantially any lumen structure or hollow organ such as vessel or intestines, based on volumetric images generated by any suitable imagine technique such as computed tomography, resonance magnetic imaging or the like.

## Background of the invention

Virtual endoscopy methods consist in exploring organs by navigating through data volumes acquired by medical imaging systems such as computed tomography scanners or magnetic resonance scanners. The investigations can then be done remotely at any time once the data has been acquired, without the inconvenience of using a real physical (real) endoscope on the patient.

Medical imaging systems usually produce data sets in the form of 2D images representing the successive slices of a 3D volume. The data can be stored in standard file formats such as DICOM, to be subsequently used in various fashions depending on the application.

The volume of information acquired is usually huge and difficult to analyze by a practitioner without the proper tools for the exploration. In the other hand, the great flexibility of numerical methods allows representation and exploration ways of a much higher flexibility and efficiency than direct visual inspection with a physical endoscope for instance.

Organs can be extracted from the 3D data volume by image segmentation techniques, and displayed with computer tools in ways similar to what would be seen with a physical endoscope. More efficient representation methods can also be used, which bring more meaning for the practitioner.

In the other hand, a big care must be taken in avoiding display artifacts due to the algorithms.

The data representation is for instance of major importance for the exploration of hollow organs like intestines or blood vessels, featuring an elongated lumen, because of their tubular geometry and the folds which make the inspection naturally uneasy. Applications are for instance virtual colonoscopy, for searching cancerous polyps in the intestine.

The filet view or dissection view are efficient imaging methods for such organs. They consist in computing an image of a portion of intestine or vessel as if it had been cut longitudinally and open flat. These methods have the advantage of potentially allowing representations with minor spatial deformations, which is important to render properly the size and shapes of the features.

The document WO 2006/000925 by Dekel et al. discloses a virtual endoscopy method based on what is called in the document a perspective filet view method.

The method allows imaging the interior of an intestine, but in a way that still introduces important spatial deformations in an unpredictable way, as they depend on the shape of the lumen.

The document by A. Vilanova Bartroli, R. Wegenkittl, A. König, E. Gröller, E. Sorantin, "Virtual Colon Flattening", Proc. of the Joint Eurographics - IEEE TCVG Symposium on Visualization in Ascona, May 28-30, 2001, pages 127-136, discloses a virtual endoscopy method in which a filet view is generated by projecting the organ surface onto a cylinder with an angular sampling depending on the perimeter, so as to sample constant arc length of the organ surface.

The document by SHIN B S ET AL, entitled "Efficient unfolding of virtual endoscopy using linear ray interpolation" and published on 01 February 2009, discloses a method of unfolding of internal structures of organs, whereby a central path is determined in the structure, primary sampling points on the central path are defined and if an intersection of their associated sampling planes is found inside the structure, the orientations of these sampling planes are adjusted until they do not intersect inside the structure and finally, based on linear interpolation of the orientations of two consecutive primary sampling planes, rays are cast independently from secondary sampling points and are therefore not necessarily contained in a plane.

The purpose of the invention is to propose an imaging method, well adapted in particular for the virtual endoscopy of elongated organs, where spatial deformations and display artifacts are minimized.

## Summary of the invention

In order to reach that objective, the invention proposes a method for performing virtual endoscopy on a volumetric image of a lumen-defining structure having an elongated lumen according to claim 1.

According to an embodiment, the unfolding axis may substantially follow the center of the lumen.

According to an embodiment, the ray casting step may further comprise steps of:

- extending a ray from the unfolding axis until it intersects the structure,
- calculating the vector normal to the structure at the intersection with the ray,
- calculating the lighting using said normal vector, and
- calculating said pixel value using the lighting.

According to an embodiment, the unfolded view may comprise series of pixels, each series corresponding to a sampling plane, each pixel corresponding to substantially identical arc length in the structure, said series of pixels being stacked so as to create a 2D image in the same order as the sampling positions of said sampling planes along said unfolding axis.

According to an embodiment, the method may further comprise the steps of smoothing the variations of orientation of the sampling planes along the unfolding axis before and after the step of readjusting the orientation said sampling planes.

According to another aspect, the method may further comprise the step of inserting additional sampling planes between consecutive existing sampling planes whose intersections with the structure are at some places separated by a distance larger than a pre-defined value.

It is a further object of the invention to provide a computer program implementing the method.

## Description of the drawings

The methods according to embodiments of the present invention may be better understood with reference to the drawings, being understood that these drawings are given for illustrative purposes only and are not meant to be limiting. Other aspects, goals and advantages of the invention shall be apparent from the descriptions given hereunder.

- Figure 1 shows a longitudinal section view of an elongated organ with a lumen, and the sampling planes,
- Figure 2 shows a cross section view along a sampling plane of the same organ, with ray casting performed in accordance with prior art methods,
- Figure 3 shows a filet view of the organ, which is a portion of colon, obtained with the method of prior art,
- Figure 4 shows a cross section view along a sampling plane of the organ, with ray casting performed according to the method of the invention,
- Figure 5 shows dispositions of the sampling planes according to the invention,
- Figure 6 shows a filet view of the organ, which is a portion of colon, obtained with the method of the invention.

## Detailed description of the invention

The filet view method according to the invention is illustrated on the imaging of a colon, which is an organ difficult to represent because of its irregular shape and numerous folds. The data is issued from a computed tomography scanner. This configuration is of course just an example of application of the invention without any intention to be limitative. The method of the invention can be applied without any loss of generality on any kind of other structures (including liver, blood vessels, ...) for which it may bring relevant information, and by using any kind of data obtained by any investigation system (including magnetic resonance imaging scanners, ...).

As previously explained, the purpose of the invention is to create an unfolded (or flattened) view of the inside of a tubular structure, able to be displayed as a 2D image.

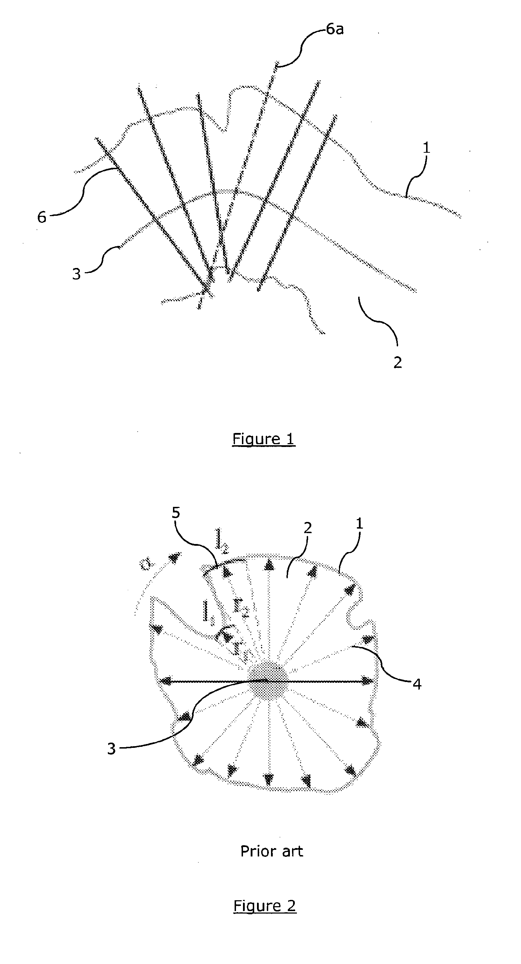

With reference to figure 1, a first step consists in determining a path or unfolding axis 3. This unfolding axis 3 is substantially inside the lumen 2 and follows substantially the shape of the structure 1. Preferably, this unfolding axis 3 follows substantially the center of the lumen 2. The axis 3 is determined from a preliminary step of analysis of the data in which the structure 1 is identified.

Then, a series of sampling planes 6 are defined along that path 3, so that each of them intersects with the path 3 at a sampling point, and so that each of them, at least initially, is substantially perpendicular to the path 3 at that sampling point.

Next, series of rays 4 issued from the sampling points are cast with radial directions in the sampling planes, into the lumen 2.

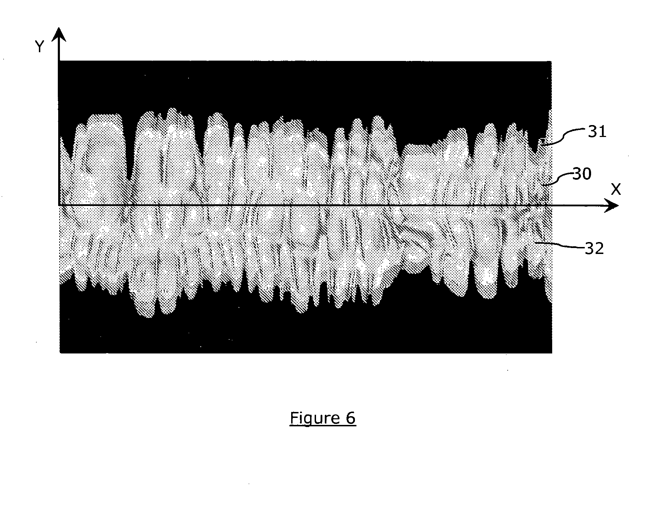

With reference to figure 6, a 2D filet view image 30 is then built in such a way that the sampling points on the unfolding axis 3 correspond to an **X** coordinate in the output image, while the directions of the rays cast at a given sampling point correspond to a **Y** coordinate in the output image.

According to a preferred mode of realization, with no intention to be limitative, the values of the pixels in the 2D filet view image 30 is determined as follows: The ray cast extends a ray 4 from the point on the unfolding axis 3. That ray 4 is increased by a predefined step increment until it intersects the wall of the tubular structure 1. That wall is for instance defined by an intensity threshold crossed in the data. Once an intersection has taken place, a normal or perpendicular vector to that wall is calculated at the intersection point using the central difference of the volume intensities at that point. This normal vector is then used to calculate the lighting, from which the pixel intensity on the output image 30 is deduced.

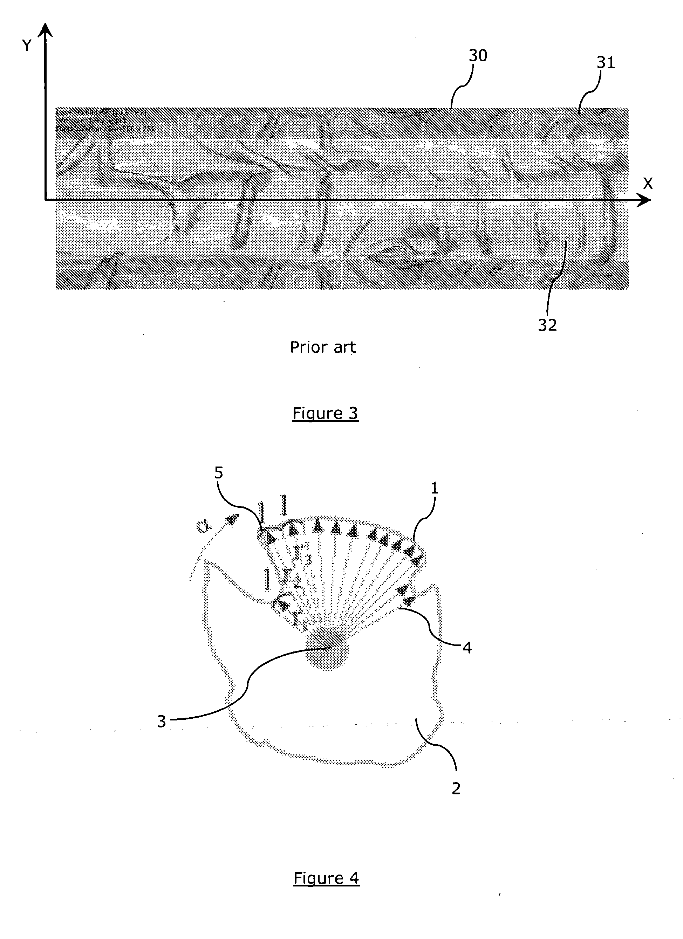

With reference to figure 2, in prior art methods such as the one described in WO 2006/000925, the unfolding of the view is done using a constant angle sampling method, in which the tubular structure 1 is sampled radially using a constant angle increment $\alpha$ between the rays 4 cast in the sampling planes. As illustrated in figure 3, this approach can lead to large deformations in the filet view image 30 of the flattened tubular structure 1 in the **Y** direction if the diameter of that tubular structure varies. These deformations are due to the fact that a pixel in the 2D image 30, corresponding to a ray 4 sampled with constant angle increment $\alpha$, represents a portion of the structure 1 whose dimension (or arc length **l1** or **l2** in figure 2) is not constant but proportional to the length (**r1** or **r2**) of the ray 4. In addition to geometrical deformations, theses representations bring also the risk of undersampling some places and missing some details.

With reference to figure 4 and figure 6, in the method according to the invention the sampling mode allows preserving a constant wall distance between pixels in the flattened view 30, so that the pixels of the filet view image 30 represent an area of the structure 1 of similar dimension. The sampling is done in the sampling plane 6 in such way that the rays 4 intercept a substantially constant arc length **l** of the structure wall 1. This is achieved by varying the sampling angle increment $\alpha$ according to the wall distance **ri** from the unfolding axis 3. The angle increment $\alpha$ from one ray 4 to the next is chosen to be inversely proportional to the wall distance **ri,** according to the formula:

$$\alpha = 1 / ri.$$

As shown in figure 6, the method of the invention results in a more realistic filet view image 30 which makes visible an additional information compared to prior art: the variations of diameter of the structure 1. In addition, the sampling rate of the structure is now substantially constant at least in the **Y** direction, so there is also much less risk compared to prior art methods to have details blurred by undersampling effects at some places.

The angular sampling on the sampling planes 6 is preferably done over more that 360°, in order to avoid cutting details in the 2D image which would make them less noticeable. This results in overlapping areas corresponding to the upper and lower part of the filet view image 30. These overlapping areas 31 are made visible on the image 30 by a color coding: they appear for instance in figure 6 in darker tones that the non-overlapping areas 32.

In areas of high curvature, the sampling planes 6 may intersect each other inside the tubular structure 1 causing artifacts in the output filet view image 30. These artifacts may result in ghost images, with features displayed repetitively in the image 30. This problem is illustrated on figure 1 for the sampling plane 6a.

In order to correct this problem, the invention further comprises an artifact removal method whose purpose is to readjusts the sampling planes 6 so as to ensure that the following conditions are met in the filet-view image 30:

- There are no artifacts resulting from subsequent sampling planes 6 that intersect inside the tubular structure lumen 2, causing parts of the tubular structure 1 to be shown repetitively.
- There are no features along the tubular structure 1 (above a specific user-set size), which are missed by the scanning because they are located between two sampling planes 6.

The artifact removal method consists in readjusting the orientation of sampling planes 6, in order to avoid mutual crossings of planes inside the lumen 2. So after adjustment some sampling planes 6 are no longer perpendicular to the unfolding axis 3 but the structure 1 is described in an optimal way.

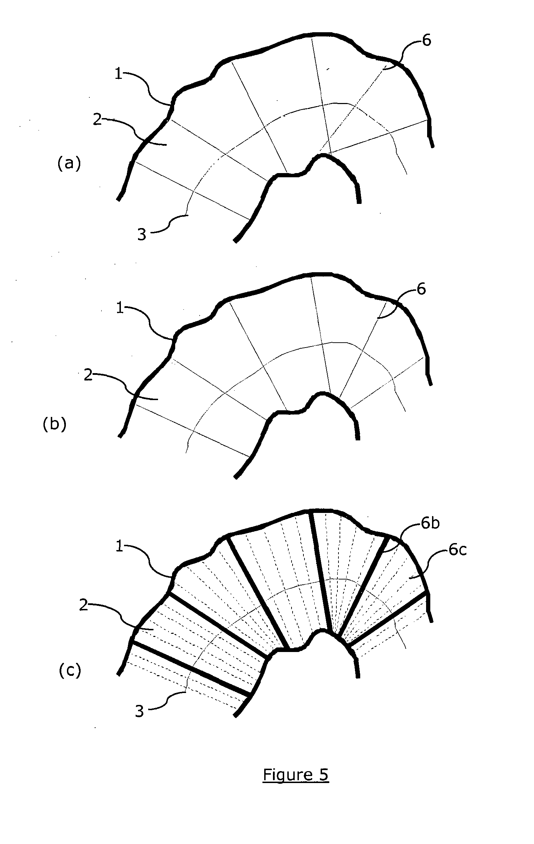

With reference to figure 5, the artifact-removal algorithm looks at each plane 6 on the unfolding axis 3 and the plane 6 preceding it (starting from the second position on the unfolding axis 3) and calculates whether the planes 6 intersect within the tubular structure lumen 2 (figure 5a). If so, the artifact-removal algorithm re-adjusts the orientation of the current plane 6 to move the intersection area between the planes 6 outside the wall of the tubular structure (figure 5b). The same process is then repeated for each sampling point corresponding to a sampling plane 6 on the unfolding axis 3.

In order to avoid side effects due to numerical computation with limited precision and the large size of the planes 6 compared to their spacing (which is actually very small), it is preferred to do the plane re-adjustment on a "rough unfolding axis" 3 with more widely spaced sampling points and consequently more widely spaced sampling planes 6b. This "rough unfolding axis" 3 is obtained by interpolating the original unfolding axis positions to a pre-defined spacing using for instance a Catmull-Rom Spline method.

Once the widely spaced sampling planes 6b have been adjusted, the unfolding axis 3 with the final spacing and the necessary sampling planes 6 is obtained by adding intermediate sampling planes 6c. The location and the orientation of these intermediate sampling planes 6c are obtained by interpolation between the sampling positions and by interpolation of the orientations of the sampling planes 6b along the rough path 3, using for instance a Catmull-Rom interpolation. The result is that the unfolding axis 3 holds as many sampling planes 6c as necessary and no one of these sampling planes 6c crosses another one inside the lumen 2.

In addition to the correction of the crossings of the sampling planes 6 into the lumen 2, or plane de-intersection step, a smoothing of the variations of the plane orientations can be advantageously done before and after that de-intersection :

- The smoothing before the de-intersection helps to avoid problems with planes that are too much intertwined to be corrected properly,
- The smoothing after the de-intersection makes the spacing between planes more even and helps increasing the quality of the final rendering.

Such smoothing can be done with a sliding mean averaging or low-pass filtering of the variations along the unfolding axis 3 with a Gaussian kernel for instance.

In addition to plane intersections, high curvature areas also pose the danger that some anatomical feature (e.g. a polyp) may be missed on the outer edge of the curve due to the increased sampling spacing (see figure 5). To avoid this problem, additional sampling planes 6 are added in areas where the sampling is not sufficient. The addition of planes is performed after the sampling plane 6 de-intersection. It is done by iteratively inserting a sampling plane 6 halfway between two consecutive sampling planes 6 whose intersections with the structure 1 are at some places separated by a distance larger than a pre-defined value, until no such case remains.

The artifact-removal method can be used independently of the angular sampling method in the sampling planes. In particular it is also efficient when using a constant-angle sampling method.

While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the scope of this invention.

## Claims

1. A method for performing virtual endoscopy on a volumetric image of a lumen-defining structure (1) having an elongated lumen (2), comprising steps of:

   - determining an unfolding axis (3) substantially inside the lumen (2),
   - defining sampling planes (6) substantially perpendicular to and intersecting said unfolding axis (3) at sampling positions,
   - selecting ray casting directions (4) in said sampling planes (6), extending radially from the unfolding axis (3) with sampling angles,
   - performing ray casting to define pixel values,
   - arranging said pixel values into an unfolded view (30),

   **characterized in that** it further comprises a step of readjusting the orientation of sampling planes (6) so that said sampling planes (6) do not cross each other inside the lumen (2), further comprising the steps of :

   - computing a rough unfolding axis (3) with more widely spaced sampling points and more widely spaced first sampling planes (6b) by interpolating the unfolding axis sampling positions to a pre-defined spacing,
   - readjusting the orientation of said first sampling planes (6b) so that to move the intersection areas between said first sampling planes (6b) outside the lumen (2),
   - inserting second sampling planes (6c) between said first sampling planes (6b) with position and orientation obtained, respectively, by interpolation between said more widely spaced sampling points, and by interpolation of the orientation of said first sampling planes (6b) along said rough unfolding axis (3).

2. The method of claim 1, wherein said ray casting directions (4) are selected so that the angle increment between them is substantially inversely proportional to the ray propagation distance into the lumen (2), from the unfolding axis (3) to the structure (1).

3. The method of claims 1 or 2, wherein the unfolding axis (3) substantially follows the center of the lumen (2).

4. The method of any of the preceding claims, wherein said ray casting further comprises steps of:

   - extending a ray (4) from the unfolding axis (3) until it intersects the structure (1),
   - calculating the vector normal to the structure (1) at the intersection with the ray (4),
   - calculating the lighting using said normal vector, and
   - calculating said pixel value using the lighting.

5. The method of any of the preceding claims, wherein said unfolded view (30) comprises series of pixels, each series corresponding to a sampling plane (6), each pixel corresponding to substantially identical arc length in the structure (1), said series of pixels being stacked so as to create a 2D image in the same order as the sampling positions of said sampling planes (6) along said unfolding axis (3).

6. The method of any of the preceding claims, further comprising the steps of smoothing the variations of orientation of the sampling planes (6) along the unfolding axis (3) before and after the step of readjusting the orientation said sampling planes (6).

7. The method of any of the preceding claims, further comprising the step of inserting additional sampling planes (6) between consecutive existing sampling planes (6) whose intersections with the structure (1) are at some places separated by a distance larger than a pre-defined value.

8. Computer program implementing the method of any of the preceding claims.

## Patentansprüche

1. Verfahren zur Durchführung einer virtuellen Endoskopie an einem volumetrischen Bild einer, ein Lumen definierenden, Struktur (1) mit einem langgestreckten Lumen (2), das die folgenden Schritte aufweist:

   - Festlegen einer sich entfaltenden Achse (3) im wesentlichen in dem Lumen (2),
   - Definieren von Abtastebenen (6) im wesentlichen senkrecht zu der sich entfaltenden Achse (3) und diese Achse an Abtastpositionen schneidend,
   - Auswählen von Raycasting-Richtungen (4) in den Abtastebenen (6), die sich radial von der sich entfaltenden Achse (3) mit Abtastwinkeln erstrecken,
- Durchführen des Raycasting, um Pixelwerte zu definieren,
- Anordnen dieser Pixelwerte in einer entfalteten Ansicht (30),

**dadurch gekennzeichnet, dass** es weiterhin einen Schritt der Anpassung der Ausrichtung von Abtastebenen (6) aufweist, so dass sich die Abtastebenen (6) in dem Lumen (2) nicht gegenseitig schneiden, weiterhin die folgenden Schritte aufweisend:

- Berechnen einer annähernden, sich entfaltenden Achse (3) mit Abtastpunkten in größerem Abstand und ersten Abtastebenen (6b) in größerem Abstand durch Interpolation der Abtastpositionen der sich entfaltenden Achse auf einen vorbestimmten Abstand,
- Anpassen der Ausrichtung der ersten Abtastebenen (6b), um die Schnittpunktbereiche zwischen den ersten Abtastebenen (6b) außerhalb des Lumens (2) zu bewegen,
- Einschieben zweiter Abtastebenen (6c) zwischen den ersten Abtastebenen (6b), wobei man die Position bzw. die Ausrichtung durch Interpolation zwischen den Abtastpunkten in größerem Abstand und durch Interpolation der Ausrichtung der ersten Abtastebenen (6b) entlang der annähernden, sich entfaltenden Achse (3) erhält.

2. Verfahren nach Anspruch 1, wobei die Raycasting-Richtungen (4) so gewählt sind, dass der Winkelschritt zwischen ihnen im wesentlichen umgekehrt proportional zu dem Abstand der Strahlungsausbreitung in das Lumen (2), von der sich entfaltenden Achse (3) zu der Struktur (1), ist.

3. Verfahren nach Anspruch 1 oder 2, wobei die sich entfaltende Achse (3) im wesentlichen der Mitte des Lumens (2) folgt.

4. Verfahren nach einem der vorhergehenden Ansprüche, wobei das Raycasting weiterhin die folgenden Schritte aufweist:

- Ausweiten eines Strahls (4) von der sich entfaltenden Achse (3), bis er die Struktur (1) schneidet,
- Berechnen des Vektors senkrecht zu der Struktur (1) an dem Schnittpunkt mit dem Strahl (4),
- Berechnen der Beleuchtung unter Verwendung des Normalvektors, und
- Berechnen des Pixelwertes unter Verwendung der Beleuchtung.

5. Verfahren nach einem der vorhergehenden Ansprüche, wobei die entfaltete Ansicht (30) eine Reihe von Pixeln aufweist, wobei jede Reihe einer Abtastebene (6) entspricht, wobei jedes Pixel einer im wesentlichen identischen Bogenlänge in der Struktur (1) entspricht, wobei die Reihe von Pixeln übereinanderlagert, um ein 2D-Bild in derselben Reihenfolge zu erzeugen wie die Abtastpositionen der Abtastebenen (6) entlang der sich entfaltenden Achse (3).

6. Verfahren nach einem der vorhergehenden Ansprüche, das weiterhin die Schritte des Glättens der Abweichungen der Ausrichtung der Abtastebenen (6) entlang der sich entfaltenden Achse (3) vor und nach dem Schritt des Anpassens der Ausrichtung der Abtastebenen (6) aufweist.

7. Verfahren nach einem der vorhergehenden Ansprüche, das weiterhin den Schritt des Einschiebens weiterer Abtastebenen (6) zwischen aufeinanderfolgenden vorhandenen Abtastebenen (6) aufweist, deren Schnittpunkte mit der Struktur (1) an manchen Stellen durch einen Abstand getrennt sind, der größer ist als ein vorbestimmter Wert.

8. Computerprogramm, das das Verfahren nach einem der vorhergehenden Ansprüche ausführt.

**Revendications**

1. Procédé d'exécution d'une endoscopie virtuelle sur une image volumétrique d'une structure définissant une lumière (1) ayant une lumière allongée (2), comprenant des étapes consistant à :

- déterminer un axe de dépliage (3) sensiblement à l'intérieur de la lumière (2),
- définir des plans d'échantillonnage (6) sensiblement perpendiculaires audit axe de dépliage (3) et croisant celui-ci à des positions d'échantillonnage,
- sélectionner des directions de propagation de rayons (4) dans lesdits plans d'échantillonnage (6), s'étendant radialement depuis l'axe de dépliage (3) avec des angles d'échantillonnage,
- exécuter une propagation de rayons pour définir des valeurs de pixels,
- agencer lesdites valeurs de pixels en une vue dépliée (30),

**caractérisé en ce qu'**il comprend en outre une étape de réajustement de l'orientation des plans d'échantillonnage (6) de telle sorte que lesdits plans d'échantillonnage (6) ne se croisent pas à l'intérieur de la lumière (2), comprenant en outre des étapes consistant à :

- calculer un axe de dépliage approximatif (3) avec des points d'échantillonnage plus largement espacés et des premiers plans d'échantillonnage (6b) plus largement espacés en interpolant les positions d'échantillonnage de l'axe de dépliage à un espacement prédéfini,

- réajuster l'orientation desdits premiers plans d'échantillonnage (6b) de façon à déplacer les zones d'intersection entre lesdits premiers plans d'échantillonnage (6b) en dehors de la lumière (2),

- insérer des seconds plans d'échantillonnage (6c) entre lesdits premiers plans d'échantillonnage (6b) avec la position et l'orientation obtenues, respectivement, par interpolation entre lesdits points d'échantillonnage plus largement espacés, et par interpolation de l'orientation desdits premiers plans d'échantillonnage (6b) le long dudit axe de dépliage approximatif (3).

2. Procédé selon la revendication 1, dans lequel lesdits sens de propagation de rayons (4) sont sélectionnés de telle sorte que l'incrément d'angle entre eux soit sensiblement inversement proportionnel à la distance de propagation des rayons dans la lumière (2), depuis l'axe de dépliage (3) jusqu'à la structure (1).

3. Procédé selon la revendication 1 ou 2, dans lequel l'axe de dépliage (3) suit sensiblement le centre de la lumière (2).

4. Procédé selon l'une quelconque des revendications précédentes, dans lequel ladite propagation de rayons comprend en outre des étapes consistant à :

   - étendre un rayon (4) depuis l'axe de dépliage (3) jusqu'à ce qu'il croise la structure (1),
   - calculer le vecteur normal à la structure (1) à l'intersection avec le rayon (4),
   - calculer l'éclairage en utilisant ledit vecteur normal , et
   - calculer ladite valeur de pixel en utilisant l'éclairage.

5. Procédé selon l'une quelconque des revendications précédentes, dans lequel ladite vue dépliée (30) comprend des séries de pixels, chaque série correspondant à un plan d'échantillonnage (6), chaque pixel correspondant à une longueur d'arc sensiblement identique dans la structure (1), lesdites séries de pixels étant empilées de manière à créer une image 2D dans le même ordre que les positions d'échantillonnage desdits plans d'échantillonnage (6) le long dudit axe de dépliage (3).

6. Procédé selon l'une quelconque des revendications précédentes, comprenant en outre les étapes de lissage des variations d'orientation des plans d'échantillonnage (6) le long de l'axe de dépliage (3) avant et après l'étape de réajustement de l'orientation desdits plans d'échantillonnage (6).

7. Procédé selon l'une quelconque des revendications précédentes, comprenant en outre une étape d'insertion de plans d'échantillonnage (6) supplémentaires entre des plans d'échantillonnage (6) existants consécutifs dont les intersections avec la structure (1) se trouvent à certains endroits séparés par une distance supérieure à une valeur prédéfinie.

8. Programme informatique mettant en oeuvre le procédé selon l'une quelconque des revendications précédentes.

Figure 1

Prior art

Figure 2

Prior art

Figure 3

Figure 4

Figure 5

Figure 6

## REFERENCES CITED IN THE DESCRIPTION

**Patent documents cited in the description**

- WO 2006000925 A, Dekel

**Non-patent literature cited in the description**

- **A. VILANOVA BARTROLI ; R. WEGENKITTL ; A. KÖNIG ; E. GRÖLLER ; E. SORANTIN.** Virtual Colon Flattening. *Proc. of the Joint Eurographics - IEEE TCVG Symposium on Visualization,* 28 May 2001, 127-136

- **SHIN B S et al.** *Efficient unfolding of virtual endoscopy using linear ray interpolation,* 01 February 2009